# EUROPEAN PATENT SPECIFICATION

(11) **EP 4 183 688 B1**
(45) Date of publication and mention of the grant of the patent: **21.10.2026**
(21) Application number: 21209042.7
(22) Date of filing: 18.11.2021
(51) Int. Cl.: B64D 27/24, B64C 7/00, B64C 25/06, B64C 25/34

(54) **ELECTRICALLY PROPELLED AIRCRAFT**
ELEKTRISCH ANGETRIEBENES FLUGZEUG
AVIONS À PROPULSION ELECTRIQUE

(43) Date of publication of application: 24.05.2023
(73) Proprietor: Archer Aviation Inc., San Jose, CA 95134 (US)
(72) Inventor: OUTA, Ali, 82205 Gilching (DE); BRESCIANI, Luca Mario, 82131 Gauting (DE); GUO, Wei, 81243 München (DE); BORN, Sebastian, 81541 München (DE); MÖBIUS, Andreas, 82234 Wessling (DE); WIEGAND, Daniel, 82234 Wessling (DE); ANTONINI, Alessandro, 82234 Wessling (DE); OLESEN, Nicholas, 82234 Wessling (DE)
(74) Representative: Finnegan Europe LLP

(56) References cited:
- CN-U- 208 165 250
- US-A- 2 403 523
- US-A1- 2017 217 574
- US-A1- 2018 050 791
- US-A1- 2020 102 068
- US-A1- 2020 216 170

## Description

The present invention relates to an electrically powered aircraft.

Landing gear enables an aircraft to move along the ground, to achieve the required take-off speed, to absorb land shocks and to absorb other shocks, for example, caused by ground waves.

The vast majority of landing gears are so-called tricycle landing gears, with a main landing gear with at least one wheel on each of the right and left sides centered on the aircraft, and a tail or nose landing gear with at least one wheel centered either at the very rear or at the very front. Just as a three-legged stool cannot tilt, such an undercarriage arrangement on an airplane provides secure footing and even load distribution during landing.

The wheels of each of the two main landing gears are mounted on a spring strut, which contains both components of various kinds necessary to absorb the rolling and landing shocks and a device for effectively damping the spring motion. These spring struts can be cantilevered in a rigid mount (so-called single-leg landing gear structure) or articulated and guided by several support struts, which are also articulated (so-called tripod landing gear structure).

In addition, landing gears can be divided into non-retractable (fixed) or retractable landing gears. Whereas in the first half of the last century mainly rigid landing gears were used, today the retractable landing gear, which is retracted after takeoff, covered by landing gear doors if necessary, and extended again before landing, is the rule in order to reduce air resistance. Aircraft with high terminal speeds today always have retractable landing gears.

However, for smaller aircraft, at less high speeds, the simpler non-retractable (fixed) landing gears are still preferred, which are attached to the aircraft in such a way that, except for changes in their shape due to deflection, they retain their shape throughout flight. This is especially true for electrically powered, vertical take-off and landing aircrafts (eVTOLs), which have been and are being developed by various companies due to advances in electric propulsion and the growing need for new vehicles for urban air mobility (air taxi), and which will become increasingly important. For such eVTOLs, a retractable landing gear would be far too heavy and is therefore not required, since also the aerodynamic drag of the landing gear is not an issue at low airspeeds.

A non-retractable (fixed) landing gear is less complicated, more robust, and less expensive to manufacture and maintain. In particular, its simpler design compared to a retractable landing gear results in weight reduction, which is a decidedly important criterion, especially for electrically powered aircraft, to enable the longest possible ranges at lower cost and minimal environmental footprint.

However, since a non-retractable (fixed) landing gear maintains its position unchanged even during flight, such a landing gear is also associated with significantly higher air resistance compared to a retractable variant, which has a negative impact on speed, energy consumption and thus the range of the aircraft. These aforementioned disadvantages are particularly intolerable in the case of purely electrically powered aircraft, which have only on-board energy storage (for example in the form of rechargeable batteries) with a limited energy density.

Moreover, the landing gear does not only provide high frontal drag. It can also negatively affect the aerodynamic stability and thus the controllability of the aircraft in cruise flight.

To date, in the design and optimization of a non-retractable (fixed) main landing gear, the traditional, structural requirements (i. e., in terms of supporting and transmitting loads applied during takeoff, landing and ground operations) on the one hand, and the aerodynamic requirements (i.e., in terms of reducing drag and flight instability) on the other, have been addressed in separate ways.

For example, it is well known to provide additional aerodynamic (streamlined) fairings for the main landing gear legs and wheels (such as in the Brditschka HB-23 motor glider). However, such additional landing gear fairings mean additional weight.

In this regard, US 2020/216170 A1 describes a fully faired landing gear for aircraft that optionally includes an integrated landing-gear step. A landing gear frame is designed for strength and to resist forces during landings. The frame can be designed to deform elastically to absorb energy during rough landings. A fairing encloses this frame to smooth airflow over it, which in turn reduces drag and noise during flights.

A landing gear for an amphibious aircraft is described in US 2018/050791 A1. Said landing gear comprises a wheel for rolling contact with a landing surface, and a deflector which defines a water-riding hull extending predominantly forwardly of said wheel. Said deflector has an accommodation in which said wheel is mounted, said wheel extending partially downwardly proud of said deflector.

US 2 403 523 A discloses various designs and configurations for aircraft landing gear strut units. In one configuration, the strut unit is cantilevered from the aircraft body. The strut unit is mounted on a support member that is pivotally connected to the aircraft. There is also an energy absorbing mechanism between the strut unit and the support member. In addition, a link connects the strut unit to a fixed part of the aircraft.

US 2017/217574 A1 presents various configurations for an improved suspension system designed for an aircraft tail wheel. Said suspension system includes a bracket connectable to the aircraft fuselage, an elongated arm pivotally attached to the bracket, and a reciprocating shock absorber connected between two brackets, with the elongated arm attached to one of the brackets. A tire is attached to the second bracket using an axle and a fork.

A flying vehicle equipped with a shock absorbing device for simplified assembly and disassembly is known from CN 208 165 250 U. This shock absorbing device comprises an upper support connecting portion, a shock absorbing spring, a lower support connecting portion, and a shock absorbing ring sleeve. The shock absorbing spring connects the upper and lower support connecting portions and is surrounded by the shock absorbing ring sleeve.

According to US 2020/102068 A1, an aircraft has a fuselage with a pivotally attached nosecone/windscreen, which when pivoted, opens to reveal passenger and cargo compartments. It features fixed wings extending laterally, one or more propellers that provide thrust, motors to drive these propellers, and a power source for the motors. The aircraft includes specially designed landing gear modules that are retractable and deployable.

Since weight reduction is of paramount importance, especially in the development of an electrically powered aircraft, there is an urgent need for an electrically powered aircraft whose main landing gear not only satisfies structural safety requirements, but at the same time also improves the aerodynamic characteristics of the aircraft without significantly increasing the weight and thus the energy consumption of the aircraft.

According to the present invention, this need is met by providing an electrically powered aircraft having the features of independent claim 1. Advantageous embodiments of this electrically powered aircraft are given in dependent claims 2 to 14.

Accordingly, the present invention provides an electrically powered aircraft, comprising a fuselage, at least one non-retractable main landing gear, a structural component, and at least one fairing component having an aerodynamically shaped outer surface, wherein said main landing gear comprises a wheel and linkage kinematics configured to attach said wheel to said structural component, wherein said structural component supports and transmits the loads exerted by the main landing gear to the fuselage as well as performs an aerodynamic stability function, wherein the main landing gear is partially covered by the at least one fairing component, and wherein the at least one fairing component is integrally formed with the structural component and also supports the loads exerted by the main landing gear and transmits them to the fuselage of the aircraft.

According to the present invention, the structural component to which the main landing gear is attached provides a dual function. On the one hand, it has a structural function to safely absorb the loads introduced via the wheel and linkage kinematics during landing and ground operations and to transfer them to the aircraft fuselage. On the other hand, however, the structural component also has an aerodynamic stability function, in particular to reduce yaw instability during flight. Since the structural component is a mandatory component anyway for the attachment of the main landing gear, the additional integration of the aerodynamic stability function into this already existing component can reduce the overall weight and thus the power requirements of the electrically powered aircraft, which in tum results in longer flight times and thus a decisive competitive advantage. Additional devices that stabilize the aerodynamic properties of the aircraft, for example in the form of movable or fixed flaps, slats, winglets or spoilers, can be made smaller or even completely unnecessary by integrating the aerodynamic stability function into the existing structural component for attaching the main landing gear.

Thanks to its aerodynamic shape, the fairing of the landing gear ensures a deflection of the flow around the landing gear, especially during the cruise phase, which reduces the induced drag and results in better yaw stability. As a result, this measure can also lead to a reduction in the size of the aircraft's vertical stabilizer, which reduces the weight and thus the power requirements of the aircraft. In addition, such an aerodynamic fairing prevents turbulence and the associated noise normally caused by the elements of the landing gear during flight.

The fact that the fairing component with its aerodynamic surface also serves as a structural component for absorption and transmission of the loads during landing and taxing to gate phases represents a highly integrative solution. The resulting elimination of the separation between components with an aerodynamic stability function on the one hand and primary load-bearing structural components on the other makes it possible to reduce the weight of the aircraft.

Preferably, the aerodynamic stability function encompasses the function of yaw and/or roll instability reduction in flight.

This function of reducing in-flight yaw and/or roll instability is achieved in a highly integrated manner by means of the structural component, to which the linkage kinematics of the main landing gear is attached and which shrouds this linkage kinematics from at least one side.

According to a preferred embodiment the structural component has an aerodynamically shaped outer surface.

To provide aerodynamic stability, particularly yaw stability, to the aircraft during flight, the outer surface of the structural component preferably has an aerodynamic profile (e.g., a traditional airfoil profile, or an ad hoc aerodynamic profile planned and studied in advance to provide the required stability forces).

It is particularly preferred that the structural component and the at least one fairing component form a downwardly directed fin.

Advantageously, the fin-shaped fairing of each of the two main landing gears results in a configuration comparable to an inverted V-tail of a conventional aircraft V-tail architecture. This solution potentially eliminates the need for a vertical stabilizer at the rear of the aircraft, which provides equivalent stabilization moment but at the expense of increased aircraft weight. The main landing gear is an existing equipment of the aircraft, so its aerodynamic fairing adds only little weight.

It is further preferred that the structural component and/or the fairing component has/have an airfoil profile to generate stabilizing aerodynamic forces.

The use of such airfoil profiles, which may be traditional airfoil profiles (e.g. NACA airfoils) or ad hoc airfoil profiles specifically adapted to the requirements of the respective aircraft, represents an additional aerodynamic stabilization measure.

In a further particularly preferred embodiment of the present invention, the center of pressure of the unit consisting of the main landing gear, the structural component and, eventually, the at least one fairing component is arranged behind the center of gravity of the aircraft towards a tail section of the aircraft as viewed in a side view of the aircraft.

The center of pressure is known to be the point where the total sum of a pressure field acts on a body, causing a force to act through that point. With the center of pressure of the undercarriage unit (composed of the main landing gear, the structural component to which the main landing gear is attached, and if present, the at least one fairing component which partially covers the main landing gear) positioned behind the center of gravity of the aircraft, the consequent lever arm generates a stabilizing moment about the Z-axis (yaw axis) while the aircraft is in flight. Hence, the aforementioned undercarriage unit allows for optimizing both the aerodynamic and the structural performance of the aircraft without increasing its weight.

Further preferably, a damping device in the form of a spring and/or damper element is integrated into the linkage kinematics.

Said spring and/or damper element absorbs and damps impacts and vibrations, which are introduced during landing and taxing phase from the wheel, and transfers the undamped parts of these dynamic loads to the structural component of the aircraft, which, in turn, transfers them to the fuselage.

It is further preferable in the above embodiment to connect one longitudinal end of the spring and/ or damper element to the structural component of the aircraft and connect another longitudinal end of the spring and/or damper element to the wheel directly or indirectly via an intermediate element.

The above solution represents a particularly simple and thus cost-, space- and weight-saving way of configuring the linkage mechanism, which provides a load bearing and damping mechanical connection between the wheel and the structural component of the aircraft. Due to the spring and/ or damper element the wheels can be moved for short distances to absorb dynamic loads resulting from landing impact and taxiway unevenness. Since the need for a retraction mechanism is avoided this solution is also characterized by its robustness, longevity and high reliability.

In a still further modification of the present invention, the linkage kinematics comprises a trail arm in or on which the wheel is rotatably mounted about an axis, wherein said trail arm is hinged to the structural component of the aircraft.

In order to ensure the strut remains as rigid as possible during take-off and landing, the trail arm is introduced to provide structural rigidity in the longitudinal and lateral directions, respectively. In addition, configuring the linkage kinematics with this trail arm opens up the possibility of positioning the wheel at a greater distance behind a swept trailing edge that forms a fairing component of the main landing gear. In this way, the aerodynamic performance of the main landing gear and its surrounding components can be further optimized.

In the above embodiment, it is further preferred that the one longitudinal end of the spring and/ or damper element is hinged to the structural component and the other longitudinal end of the spring and/or damper element is hinged to the trail arm.

One longitudinal end of the oil-gas strut, and the trail arm can each be hinged via a revolute joint to a bracket, which in turn is fixedly attached to the structural component of the aircraft. Another longitudinal end of the oil-gas strut is, in turn, hinged via a revolute joint to the trail arm. This joint configuration allows the linkage kinematics to have the necessary degrees of freedom to accommodate for the shock and/or vibrational loading present.

According to a particularly advantageous embodiment, which provides a highly integrated configuration, the spring and/or damper element is completely covered by a fairing component of the aircraft acting as a trailing edge surface and the trail arm and the wheel are each partially covered by said fairing component, while the trail arm and the wheel are each partially covered by a fairing component of the aircraft acting as a leading edge surface.

Hereinafter, preferred embodiments of the invention will be described in further detail with reference to the drawings. These drawings show the following:
- Fig. 1: an overall isometric view of an electrically powered aircraft according to the present invention;
- Fig. 2: a side view of the electrically powered aircraft of Fig. 1;
- Fig. 3: an enlarged view of the left-hand main landing gear and surrounding components in the electrically powered aircraft of Fig. 1;
- Fig. 4: an enlarged view of the trail-arm based linkage kinematics used in the main landing gear of Fig. 3;
- Fig. 5: an enlarged view of an alternative telescopic cantilevered configuration of the linkage kinematics; and
- Figs. 6 and 7: outboard and inboard views of the load path from the components directly attached to the wheel (not shown) to the fuselage (not shown) interface locations.

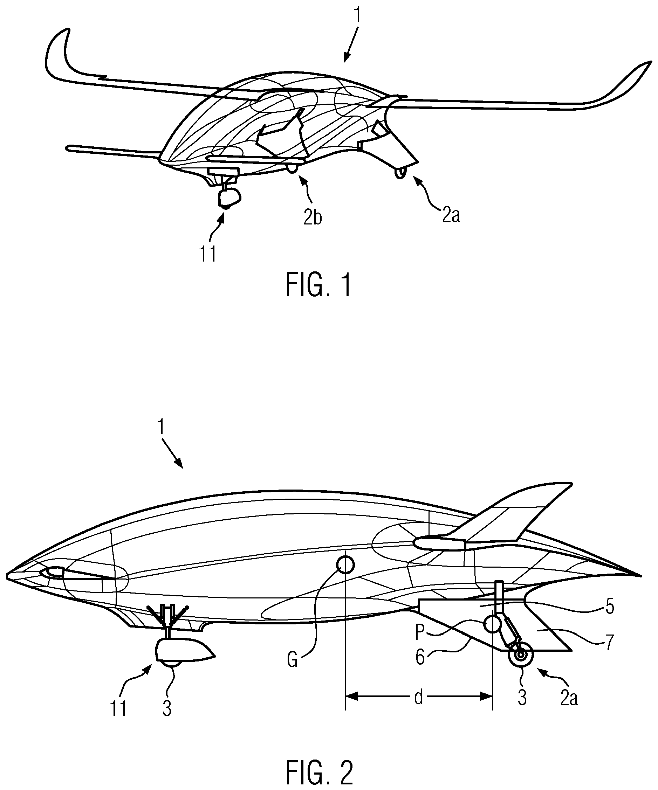

Fig. 1 shows an electrically powered vertical take-off and landing aircraft (eVTOL) 1. It can also be seen from this Fig. 1 that the aircraft (eVTOL) 1 is equipped with a landing gear system of a tricycle configuration. This landing gear system consists of a single nose landing gear 11 mounted near the front of the aircraft 1 and two main landing gears 2a, 2b mounted on either side of the aircraft 1 with attachment points on the airframe fuselage. The nose and main landing gears 11, 2a, 2b are non-retractable (fixed). This means the landing gears 11, 2a, 2b are attached to the airframe fuselage and remain extended as the aircraft 1 is flown. Complexity is reduced by this type of landing gear design and the aircraft weight is kept to a minimum without the hydraulics and corresponding mechanical gears used with retractable landing gears.

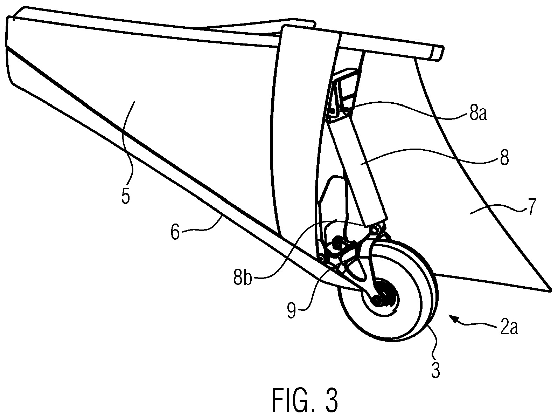

Fig. 3 is a detailed perspective view of the left main landing gear 2a shrouded with structural-aerodynamic external airfoil structures. In accordance with this Fig. 3, each landing gear 11, 2a, 2b of the tricycle landing gear system features wheels 3, and a linkage kinematics 4 that mechanically links the wheels 3 to the airframe fuselage. Moreover, a spring and/or damper element in the form of an oleo-gas strut 8 for absorbing shocks and vibrations during the landing and taxing phase of the aircraft 1 is integrated into the linkage kinematics 4 of each landing gear 11, 2a, 2b. Accordingly, the forces exerted by wheels 3 when bearing against the ground are taken up by the linkage kinematics 4, partly damped and partly transmitted to the airframe fuselage. However, the spring and/ or damper element is not limited to the illustrated oleo-gas strut 8. It is likewise conceivable and covered by the invention to use in addition to or in replacement of said oleo-gas strut 8 a spring and/or damper element in the form of a leaf-type spring gear, a rubber-disc shock absorber, an electromagnetic shock absorber, and/or a friction ring composed of one or more friction discs.

The present invention focuses on the arrangement and configuration of the main landing gears 2a, 2b and their surrounding components 5, 6, 7, as shown in more detail in Figs. 2 to 7, using the left-hand main landing gear 2a as an example. It therefore goes without saying that the following explanations also apply in a corresponding manner to the right-hand main landing gear 2b.

The left-hand main landing gear 2a as shown in Fig. 2 to 7 is attached to a structural component 5, which combines the traditional landing gear structural function to absorb and withstand the landing and ground operations loads, together with an aerodynamic stability function of reducing in-flight yaw instability to the aircraft 1. In order to fulfill the latter aerodynamic stability function, the structural component 5 is provided with aerodynamically shaped outer surfaces that are perfectly integrated with the aerodynamically shaped outer surfaces of two adjacent fairing components 6, 7, as can be seen particularly well in Fig. 3.

The aerodynamically shaped outer surface of one fairing component 7 forms a trailing edge surface (downstream surface), which smoothly extends the aerodynamically shaped outer surface of the structural component 5 toward a rear side of the aircraft 1 without offset, and shrouds the oleo-gas strut 8 of the linkage kinematics 4 along its entire extension. Moreover, this trailing edge surface also covers an upper portion of the wheel 3 and a trail arm 9, which rotatably supports the wheel 3. Thus, the damping movements provided by the kinematics of the oleo-gas strut 8 when it is loaded after the wheel 3 touches the ground occur within the aerodynamic trailing edge surface of the fairing component 7.

Moreover, also on the front side, the aerodynamically shaped outer surface of the structural component 5 continuously merges (without offset) into an adjoining aerodynamically shaped outer surface provided on another fairing component 6. This latter surface forms a leading edge surface (upstream surface) that is swept aft so that its rear end portion also comes to partially cover the trail arm 9 and the wheel 3 (see Fig. 2).

By the configuration described above and shown in Figs. 2 and 3, the structural component 5 and the two fairing components 6, 7 perfectly complement each other to enclose the left main landing gear 2a from all lateral and longitudinal sides and form a downwardly directed and swept aft fin (see Figs. 2 and 3). The same is the case for the right main landing gear 2b.

As a consequence of the above the two undercarriage units of the aircraft 1, formed by the two main landing gears 2a, 2b and the structural and fairing components 5, 6, 7 surrounding them, give the aircraft 1 an aerodynamic design comparable to an inverted V-tail design of a more traditional aircraft V-tail architecture. This is evident from the overall isometric view of the aircraft 1 in Fig. 1.

As can be seen in the side view of the aircraft 1 in Fig. 2, the center of pressure P of the undercarriage unit (formed by the main landing gear 2a and the structural and fairing components 5, 6, 7 enveloping this main landing gear 2a) is located behind the center of gravity G of the aircraft 1. The center of pressure P corresponds to the point of the aforementioned undercarriage unit where the resulting vector (of lift and drag) acts. An advantageous consequence of the relative position of the center of pressure P and the center of gravity G shown in Fig. 2 is that a lever arm generates a stabilizing moment around the Z-axis (yaw axis) while the aircraft 1 is in flight. This relative position removes the need of providing the electrically powered aircraft 1 with a dedicated tail, which admittedly would provide an equivalent stabilizing moment, but with the fundamental drawback of additional weight. The distance d between the center of gravity G and the center of pressure P along the X-direction (fore-aft-direction) of the aircraft 1 determines the yaw-stabilizing lever arm.

Since the main landing gear 2a, 2b and the structural component 5 for supporting and transmitting the loads emanating from the main landing gear 2a, 2b are indispensable elements for structural reasons, the additional integration of the aerodynamic stability function into these already existing elements represents an extremely cost-, space- and weight-saving solution.

The present invention therefore consists essentially in combining the following two main functions in a single undercarriage unit (consisting of the main landing gear 2a, 2b and the enveloping structural and possibly fairing components 5, 6, 7):
1. the structural function of withstanding the loads introduced from the wheel's ground contact point during landing and ground operations and then transmitted through the oleo-gas strut 8 to the airframe attachments and finally to the airframe fuselage; and
2. the aerodynamic stability function imparted to the aircraft 1 in flight by specifically designed external surfaces of the components 5, 6, 7 (all or only part of them) enclosing the main landing gear 2a, 2b.

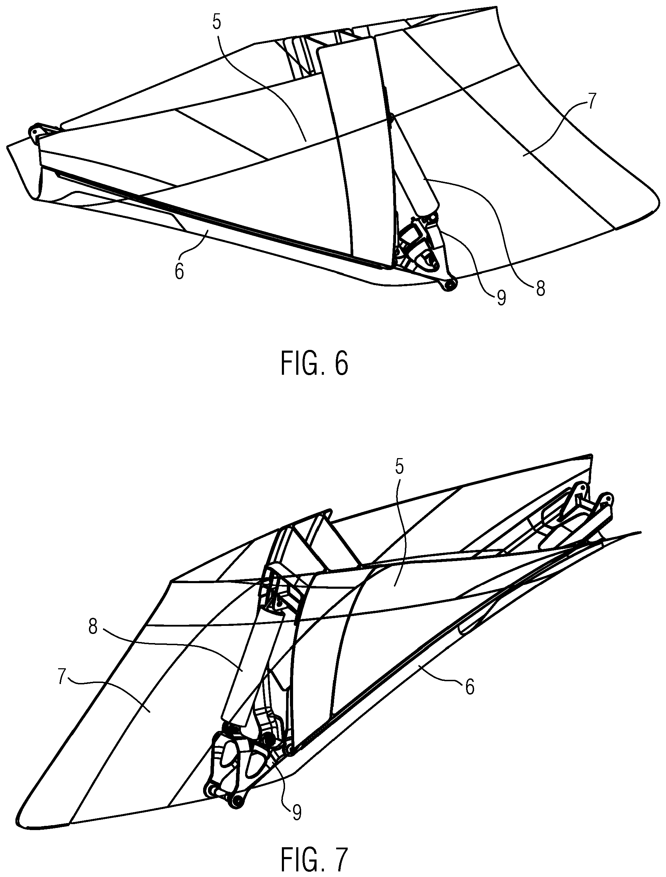

Specifically, the above dual function is assigned to the structural component 5 to which the main landing gear 2a, 2b is attached. According to function 1. above, this structural component 5 transfers the loads from the wheel 3 and the oleo-gas strut 8 to the fuselage of the airframe in all ground and flight phases (see the load paths in Figs. 6 and 7). At the same time, according to function 2. above, this structural component 5 withstands the aerodynamic loads and shields the linkage kinematics 4, in particular the oleo-gas strut 8, frontally to aerodynamically direct the airstream around the main landing gear 2a, 2b and reduce its drag in flight.

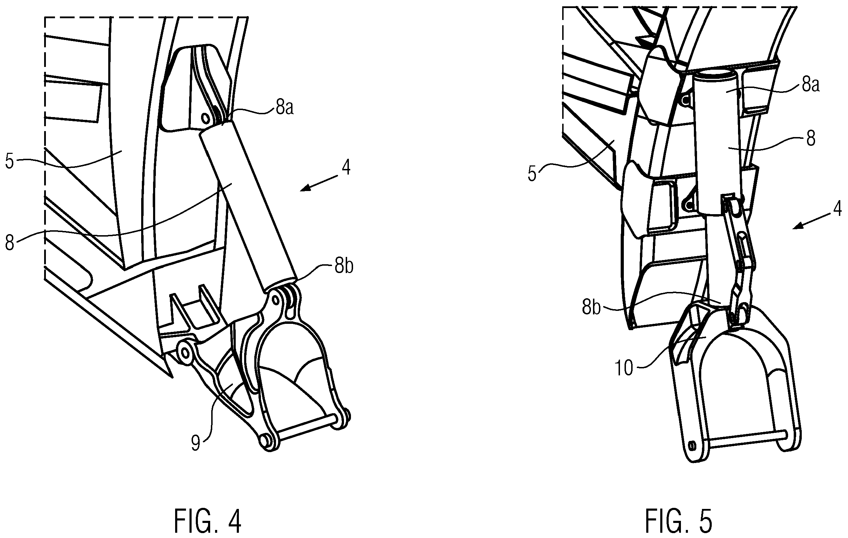

Figs. 3 and 4 show the structural component 5, the rearward facing surface of which is connected to the linkage kinematics 4 of the main landing gear 2a at two attachment points to perform the structural function 1. described above. At the same time, the structural component 5 is aerodynamically shaped at its two sideways facing surfaces to perform the aerodynamic stability function 2. described above.

Furthermore, it can be seen in Fig. 3 that a fairing component 6 is connected to a front side of the structural component 5 to form a leading edge, and another fairing component 7 is connected to a rear side of the structural component 5 to form a trailing edge. The outer surfaces of the structural component 5 and the two fairing components 6, 7 perfectly complement each other to form an aerodynamically shaped downward sloping fin. This aerodynamic fin almost completely encloses the linkage kinematics 4 (in this particular configuration consisting of the trail arm 9 and the oleo-gas strut 8) of the main landing gear 2a and partially encloses the wheel 3 of the main landing gear 2a.

Although in Figs. 2 and 3 the structural component 5 and the two fairing components 6, 7 are shown as separate components, distinguished from each other by different shading for ease of reference, these components 5, 6, 7 can also be integrally connected to each other so as to form a single component partially covering the main landing gear 2a from all four sides (laterally and longitudinally). In this case, at least part of the single component, namely the part corresponding to structural component 5 in Figs. 2 to 7, would fulfill the required dual function of structural and aerodynamic stability.

The linkage kinematics 4 of the main landing gear 2a, 2b for establishing the damped mechanical connection between the wheel 3 and the structural component 5 may be embodied in the following two alternative configurations shown in Figs. 4 and 5:
1. trail-arm based configuration (see Fig. 4): According to this configuration, one longitudinal end 8a of the oleo-gas strut 8 is hinged to the structural component 5 and the other longitudinal end 8b of the oleo-gas strut 8 is hinged to the trail arm 9, in which the wheel 3 is rotatably mounted about an axis. Said trail arm 9 is, in turn, hinged to the structural component 5 of the aircraft 1. This trail-arm based configuration allows for positioning the wheel 3 further behind the swept aft leading edge (formed by the front fairing component 6), and hence for optimizing both the aerodynamic and structural performance of the design.
2. telescopic cantilevered configuration (see Fig. 5): Alternatively, and depending on the overall design, the oleo-gas strut 8 may be housed within the structural and fairing components 5, 6, 7 surrounding the main landing gear 2a, 2b without the presence of a trail arm 9. In this configuration, the oleo-gas strut 8 is designed as a cantilever structure in that its cylinder is fixedly mounted to the rear of the structural component 5 and the free longitudinal end 8b of its piston rod is directly connected to the wheel 3. This direct connection to the wheel 3 can be realized by means of a fork-shaped coupling element 10 fixedly connected to the piston rod end, which rotatably supports the wheel 3.

However, both configurations have in common that the oleo-gas strut 8 is integrated into the linkage kinematics 4 in order to damp axial movements of the first strut part (piston rod) relative to the second strut part (cylinder).

The main structural load paths are shown in Figs. 6 and 7. In the outboard view of Fig. 6 and the inboard view of Fig. 7, the load paths in the stressed components of the left main landing gear 2a, i.e. from the trail arm 9 connected to the wheel 3 (not visible) to the structural component 5 to which the linkage kinematics 4 of the landing gear 2a is attached, are visualized by black and gray shades: Black are the most heavily loaded primary structures and gray are the primary structures that contribute but are less stressed. The transparent surfaces are only part of the aerodynamic fairing. As can also be seen from Figs. 6 and 7, the structural component 5 is highly integrated with the adjoining aerodynamic surfaces, in particular with the rear-side fairing component 7 (trailing edge) covering the articulated linkage kinematics 4 of the main landing gear 2a.

According to the illustrated embodiment, the two fairing components 6, 7 forming the leading edge and the trailing edge of the fin-shaped undercarriage unit are non-structural, and are therefore not part of the load path analysis in Figs. 6 and 7 and shown here without shading. However, it is emphasized that, in general, the following two embodiments may be considered to be encompassed by the present invention:
1. All the components with aerodynamic stability function provide also primary load bearing capability. With reference to Figs. 3, 6 and 7, this would mean that not only the structural component 5, but also the two fairing components 6, 7 forming the leading and trailing edges of the fin-shaped undercarriage unit support and transmit the loads to the aircraft fuselage.
2. Only part of the components with aerodynamic stability function provide also primary load bearing capability. In the case of the embodiments illustrated in the accompanying figures, this means that only the structural component 5 performs a load bearing (structural) function. However, instead of the component designated by the reference sign "5", one or two of the components designated by the reference signs "6" and "7" can also become the "structural component" within the meaning of the present invention by rearranging the attachment points of the linkage kinematics 4 accordingly. In this case, the component marked with the reference sign "5" could be "downgraded" to a pure fairing component with only an aerodynamic stability function.

The aerodynamic stability function is achieved by two measures; first, by having the point of pressure P of the undercarriage unit behind the center of gravity G of the aircraft 1 and thereby inducing yaw stabilizing forces into the aircraft 1 (see Fig. 2), and second, by using different possible airfoil shapes to generate such stabilizing forces (see Fig. 3). The specific shape of the aerodynamic surfaces depends on the specific design requirements, such as integration with the landing gear kinematics, structural strength and aerodynamic performance optimization. It is preferable to have classical airfoil profiles, but nothing prevents to employ ad hoc shapes, studied to fulfill the structural and aerodynamic functions herein described. Accordingly, the following two embodiments for the aerodynamically shaped surfaces are possible:
1. conventional airfoil profile, e. g. NACA airfoils; and
2. ad hoc aerodynamic profile, thoroughly studied and tested in advance to ensure the required stabilizing forces. Some of the main parameters affecting the design are: surface area, airfoil shape (chord and thickness), position of the center of pressure P.

The present invention creates the possibility of using the main landing gear 2a, 2b (as part of a non-retractable tricycle configuration) and its encasing components 5, 6, 7 to reduce aerodynamic yaw instability in flight by combining the structural design with surfaces characterized by an airfoil profile. This approach eliminates or at least greatly reduces the need for other stabilizing surfaces (e.g., tail empennage) because the structural function of the main landing gear 2a, 2b is integrated in the aerodynamic shape.

The undercarriage unit, consisting of the main landing gear 2a, 2b and the surrounding (structural and fairing) components 5, 6, 7, acquires therefore the double functionality of primary load bearing structure and aerodynamic stability system.

According to the available prior art, the main landing gear is retractable or non-retractable and it does not provide any significant in-flight aerodynamic stabilizing function; quite on the contrary, it adds undesired drag. The in-flight stabilization is achieved here by spatially separate means depending on the aircraft architecture, mainly divided in vertical (empennage, V-tail etc.) and horizontal (tail plane, canard etc.) stabilizers. Thus, the aerodynamic stability and structural functions are not performed jointly by the aircraft undercarriage unit as in the present invention.

However, a prior art solution according to which the aircraft undercarriage unit does not combine the aerodynamic stability and structural functions does not lead to weight optimization, since the suspension system and the stabilizers must be allocated to at least two separate systems. These two separate systems yield the disadvantage of additional weight to the aircraft.

The aircraft 1 requires a landing gear system, in a tricycle configuration (nose landing gear 11 in forward position and two left-hand and right-hand main landing gears 2a, 2b in aft position) to absorb the landing impact and provide comfort; however, the aircraft 1 also requires in-flight aerodynamic stability.

The inventors succeeded in developing an aircraft 1 with a main landing gear system that provides these two different functionalities, thereby optimizing the weight of the aircraft 1. Such an aircraft 1 potentially removes the need of providing a dedicated tail, or anyway it reduces the dimension and weight of a tail section, which would provide an equivalent stabilizing moment, but with the drawback of additional weight. However, the present invention relies instead on the main landing gear 2a, 2b and the structural component 5 for its attachment, which are indispensable elements for structural purposes already present in the aircraft 1.

Advantageously, the traditional function of the main landing gear 2a, 2b to absorb loads during landing and taxing is combined with the additional function of providing the aircraft with considerable in-flight stability through aerodynamic surfaces characterized by an airfoil profile. Shielding the oleo-gas strut structure and the linkage kinematics 4 in which it is integrated with aerodynamically shaped components 5, 6, 7 and using some or all of these components 5, 6, 7 as one or more structural components 5 attached to the linkage kinematics 4 to divert the landing and taxing loads into the aircraft fuselage reduces the number of systems required for the aircraft 1. By combining traditional landing gear support structures with traditional aerodynamic stabilizing surfaces into one single system the present invention allows for eliminating the need to allocate these two functions to two or more separate systems.

The reduction in overall aircraft weight achieved by combining the functions of the traditional main landing gear fairings as primary structure and as in-flight stabilization surfaces in one system will be used to advantage in current and future configurations of electrically powered aircraft 1. Engineers and technicians involved in the construction of such electrically powered aircraft 1 are particularly interested in weight-reducing solutions, as they are a crucial measure for gaining a competitive advantage in this rapidly emerging new market segment.

### List of reference signs

- 1: electrically powered aircraft
- 2a, 2b: (left-hand and right-hand) main landing gear
- 3: wheel
- 4: linkage kinematics
- 5: structural component
- 6: fairing component (leading edge)
- 7: fairing component (trailing edge)
- 8: spring and/or damper element, oleo-gas strut
- 8a, 8b: longitudinal ends of oleo-gas strut
- 9: trail arm
- 10: coupling element
- 11: nose landing gear
- G: center of gravity of the aircraft
- P: center of pressure of main landing gear
- d: distance between center of gravity and center of pressure

## Claims

1. Electrically powered aircraft (1), comprising a fuselage, at least one non-retractable main landing gear (2a, 2b), a structural component (5), and at least one fairing component (6, 7) having an aerodynamically shaped outer surface, wherein said main landing gear (2a, 2b) comprises a wheel (3) and linkage kinematics (4) configured to attach said wheel (3) to said structural component (5), wherein said structural component (5) supports and transmits the loads exerted by the main landing gear (2a, 2b) to the fuselage as well as performs an aerodynamic stability function, and wherein the main landing gear (2a, 2b) is partially covered by the at least one fairing component (6, 7),
**characterized in that**
the at least one fairing component (6, 7) is integrally formed with the structural component (5) and also supports the loads exerted by the main landing gear (2a, 2b) and transmits them to the fuselage of the aircraft (1).

2. Electrically powered aircraft (1) according to claim 1, wherein the aerodynamic stability function encompasses the function of yaw and/or roll instability reduction in flight.

3. Electrically powered aircraft (1) according to claim 1 or 2, wherein the structural component (5) has an aerodynamically shaped outer surface.

4. Electrically powered aircraft (1) according to any one of claims 1 to 3, wherein the structural component (5) and the at least one fairing component (6, 7) form a downwardly directed fin.

5. Electrically powered aircraft (1) according to any one of claims 1 to 4, wherein the structural component (5) and/or the fairing component (6, 7) has/have an airfoil profile to generate stabilizing aerodynamic forces.

6. Electrically powered aircraft (1) according to any one of claims 1 to 5, wherein the center of pressure (P) of the unit consisting of the main landing gear (2a, 2b), the structural component (5) and, eventually, the at least one fairing component (6, 7) is arranged behind the center of gravity (G) of the aircraft (1) towards a tail section of the aircraft (1) as viewed in a side view of the aircraft (1).

7. Electrically powered aircraft (1) according to any one of claims 1 to 6, wherein a damping device in the form of a spring and/or damper element (8) is integrated into the linkage kinematics (4).

8. Electrically powered aircraft (1) according to claim 7, wherein one longitudinal end (8a) of the spring and/or damper element (8) is connected to the structural component (5) of the aircraft (1) and another longitudinal end (8b) of the spring and/or damper element damper (8) is connected to the wheel (3) directly or indirectly via an intermediate element.

9. Electrically powered aircraft (1) according to any one of claims 1 to 8, wherein the linkage kinematics (4) comprises a trail arm (9) in or on which the wheel (3) is rotatably mounted about an axis, and wherein said trail arm (9) is hinged to the structural component (5) of the aircraft (1).

10. Electrically powered aircraft (1) according to claim 8 and 9, wherein the one longitudinal end (8a) of the spring and/or damper element (8) is hinged to the structural component (5) and the other longitudinal end (8b) of the spring and/or damper element (8) is hinged to the trail arm (9).

11. Electrically powered aircraft (1) according to claim 10, wherein the spring and/or damper element (8) is completely covered by a fairing component (7) of the aircraft (1) acting as a trailing edge surface and the trail arm (9) and the wheel (3) are each partially covered by said fairing component (7), while the trail arm (9) and the wheel (3) are each partially covered by a fairing component (6) of the aircraft (1) acting as a leading edge surface.

12. Electrically powered aircraft (1) according to claim 8, wherein the spring and/or damper element (8) is formed as a telescopic cantilevered construction in that the other longitudinal end (8b) is fixedly connected to a coupling element (10) in or on which the wheel (3) is rotatably mounted about an axis.

13. Electrically powered aircraft (1) according to any one of claims 7 to 12, wherein the spring and/or damper element (8) is at least one of the following: an oleo-gas strut; a leaf-type spring gear; a rubber-disc shock absorber; an electromagnetic shock absorber; and/or, a friction ring composed of one or more friction discs.

14. Electrically powered aircraft (1) according to any one of claims 1 to 13, wherein the main landing gear (2a, 2b) is part of a tricycle landing gear system consisting of a nose landing gear (11) in a widthwise central and forward position of the aircraft (1) and two main landing gears (2a, 2b) in a widthwise offset and rearward position of the aircraft (1).

## Patentansprüche

1. Elektrisch betriebenes Luftfahrzeug (1), umfassend einen Rumpf, mindestens ein nicht einziehbares Hauptfahrwerk (2a, 2b), eine Strukturkomponente (5) und mindestens eine Verkleidungskomponente (6, 7) mit einer aerodynamisch geformten Außenoberfläche, wobei das Hauptfahrwerk (2a, 2b) ein Rad (3) und eine Gestängekinematik (4) umfasst, die dazu konfiguriert ist, das Rad (3) an der Strukturkomponente (5) zu befestigen, wobei die Strukturkomponente (5) die durch das Hauptfahrwerk (2a, 2b) ausgeübten Lasten trägt und auf den Rumpf überträgt sowie eine aerodynamische Stabilitätsfunktion durchführt, und wobei das Hauptfahrwerk (2a, 2b) teilweise durch die mindestens eine Verkleidungskomponente (6, 7) bedeckt ist,
**dadurch gekennzeichnet, dass**
die mindestens eine Verkleidungskomponente (6, 7) einstückig mit der Strukturkomponente (5) ausgebildet ist und auch die durch das Hauptfahrwerk (2a, 2b) ausgeübten Lasten trägt und diese auf den Rumpf des Luftfahrzeugs (1) überträgt.

2. Elektrisch betriebenes Luftfahrzeug (1) nach Anspruch 1, wobei die aerodynamische Stabilitätsfunktion die Funktion der Gier- und/oder Rollinstabilitätsreduktion im Flug einschließt.

3. Elektrisch betriebenes Luftfahrzeug (1) nach Anspruch 1 oder 2, wobei die Strukturkomponente (5) eine aerodynamisch geformte Außenoberfläche aufweist.

4. Elektrisch betriebenes Luftfahrzeug (1) nach einem der Ansprüche 1 bis 3, wobei die Strukturkomponente (5) und die mindestens eine Verkleidungskomponente (6, 7) eine nach unten gerichtete Rippe ausbilden.

5. Elektrisch betriebenes Luftfahrzeug (1) nach einem der Ansprüche 1 bis 4, wobei die Strukturkomponente (5) und/oder die Verkleidungskomponente (6, 7) ein Flügelprofil aufweist/aufweisen, um stabilisierende aerodynamische Kräfte zu erzeugen.

6. Elektrisch betriebenes Luftfahrzeug (1) nach einem der Ansprüche 1 bis 5, wobei der Druckmittelpunkt (P) der Einheit, die aus dem Hauptfahrwerk (2a, 2b), der Strukturkomponente (5) und schließlich der mindestens einen Verkleidungskomponente (6, 7) besteht, in einer Seitenansicht des Luftfahrzeugs (1) gesehen hinter dem Schwerpunkt (G) des Luftfahrzeugs (1) zu einem Heckabschnitt des Luftfahrzeugs (1) hin angeordnet ist.

7. Elektrisch betriebenes Luftfahrzeug (1) nach einem der Ansprüche 1 bis 6, wobei in die Gestängekinematik (4) eine Dämpfungsvorrichtung in Form eines Feder- und/oder Dämpferelements (8) integriert ist.

8. Elektrisch betriebenes Luftfahrzeug (1) nach Anspruch 7, wobei ein Längsende (8a) des Feder- und/oder Dämpferelements (8) mit der Strukturkomponente (5) des Luftfahrzeugs (1) verbunden ist und ein anderes Längsende (8b) des Feder- und/oder Dämpferelementdämpfers (8) direkt oder indirekt über ein Zwischenelement mit dem Rad (3) verbunden ist.

9. Elektrisch betriebenes Luftfahrzeug (1) nach einem der Ansprüche 1 bis 8, wobei die Gestängekinematik (4) einen Nachlaufarm (9) umfasst, in oder an dem das Rad (3) drehbar um eine Achse montiert ist, und wobei der Nachlaufarm (9) an der Strukturkomponente (5) des Luftfahrzeugs (1) angelenkt ist.

10. Elektrisch betriebenes Luftfahrzeug (1) nach Anspruch 8 und 9, wobei das eine Längsende (8a) des Feder- und/oder Dämpferelements (8) an der Strukturkomponente (5) angelenkt ist und das andere Längsende (8b) des Feder- und/oder Dämpferelements (8) an dem Nachlaufarm (9) angelenkt ist.

11. Elektrisch betriebenes Luftfahrzeug (1) nach Anspruch 10, wobei das Feder- und/oder Dämpferelement (8) vollständig durch eine Verkleidungskomponente (7) des Luftfahrzeugs (1) bedeckt ist, die als eine Hinterkantenoberfläche wirkt, und der Nachlaufarm (9) und das Rad (3) jeweils teilweise durch die Verkleidungskomponente (7) bedeckt sind, während der Nachlaufarm (9) und das Rad (3) jeweils teilweise durch eine Verkleidungskomponente (6) des Luftfahrzeugs (1) bedeckt sind, die als eine Vorderkantenoberfläche wirkt.

12. Elektrisch betriebenes Luftfahrzeug (1) nach Anspruch 8, wobei das Feder- und/oder Dämpferelement (8) als eine teleskopische freitragende Konstruktion ausgebildet ist, indem das andere Längsende (8b) fest mit einem Kopplungselement (10) verbunden ist, in oder an dem das Rad (3) drehbar um eine Achse montiert ist.

13. Elektrisch betriebenes Luftfahrzeug (1) nach einem der Ansprüche 7 bis 12, wobei das Feder- und/oder Dämpferelement (8) mindestens eines der Folgenden ist: ein Öl-Gasfederbein; eine Blattfederanlage; ein Gummischeibenstoßdämpfer; ein elektromagnetischer Stoßdämpfer; und/oder ein Reibring, der aus einer oder mehreren Reibscheiben zusammengesetzt ist.

14. Elektrisch betriebenes Luftfahrzeug (1) nach einem der Ansprüche 1 bis 13, wobei das Hauptfahrwerk (2a, 2b) Teil eines Dreipunktfahrwerksystems ist, das aus einem Bugfahrwerk (11) in einer der Breite nach mittleren und vorderen Position des Luftfahrzeugs (1) und zwei Hauptfahrwerken (2a, 2b) in einer der Breite nach versetzten und hinteren Position des Luftfahrzeugs (1) besteht.

## Revendications

1. Avion à propulsion électrique (1), comprenant un fuselage, au moins un train d'atterrissage principal non rétractable (2a, 2b), un composant structurel (5) et au moins un composant de carénage (6, 7) ayant une surface extérieure de forme aérodynamique, dans lequel ledit train d'atterrissage principal (2a, 2b) comprend une roue (3) et une cinématique de liaison (4) conçue pour fixer ladite roue (3) audit composant structurel (5), dans lequel ledit composant structurel (5) supporte et transmet les charges exercées par le train d'atterrissage principal (2a, 2b) au fuselage et remplit également une fonction de stabilité aérodynamique, et dans lequel le train d'atterrissage principal (2a, 2b) est partiellement recouvert par l'au moins un composant de carénage (6, 7),
**caractérisé en ce que**
l'au moins un composant de carénage (6, 7) est formé d'un seul tenant avec le composant structurel (5) et supporte également les charges exercées par le train d'atterrissage principal (2a, 2b) et transmet celles-ci au fuselage de l'avion (1).

2. Avion à propulsion électrique (1) selon la revendication 1, dans lequel la fonction de stabilité aérodynamique englobe la fonction de réduction de l'instabilité en lacet et/ou en roulis en vol.

3. Avion à propulsion électrique (1) selon la revendication 1 ou 2, dans lequel le composant structurel (5) a une surface extérieure de forme aérodynamique.

4. Avion à propulsion électrique (1) selon l'une quelconque des revendications 1 à 3, dans lequel le composant structurel (5) et l'au moins un composant de carénage (6, 7) forment une ailette dirigée vers le bas.

5. Avion à propulsion électrique (1) selon l'une quelconque des revendications 1 à 4, dans lequel le composant structurel (5) et/ou le composant de carénage (6, 7) a/ont un profil de voilure pour générer des forces aérodynamiques stabilisatrices.

6. Avion à propulsion électrique (1) selon l'une quelconque des revendications 1 à 5, dans lequel le centre de pression (P) de l'unité constituée du train d'atterrissage principal (2a, 2b), du composant structurel (5) et, éventuellement, de l'au moins un composant de carénage (6, 7) est agencé derrière le centre de gravité (G) de l'avion (1) vers une section de queue de l'avion (1) tel que vu selon une vue latérale de l'avion (1).

7. Avion à propulsion électrique (1) selon l'une quelconque des revendications 1 à 6, dans lequel un dispositif amortisseur sous la forme d'un élément ressort et/ou amortisseur (8) est intégré dans la cinématique de liaison (4).

8. Avion à propulsion électrique (1) selon la revendication 7, dans lequel une extrémité longitudinale (8a) de l'élément ressort et/ou amortisseur (8) est raccordée au composant structurel (5) de l'avion (1) et une autre extrémité longitudinale (8b) de l'élément ressort et/ou amortisseur amortisseur (8) est raccordée à la roue (3) directement ou indirectement via un élément intermédiaire.

9. Avion à propulsion électrique (1) selon l'une quelconque des revendications 1 à 8, dans lequel la cinématique de liaison (4) comprend un bras tiré (9) dans ou sur lequel la roue (3) est montée de manière rotative autour d'un axe, et dans lequel ledit bras tiré (9) est articulé au composant structurel (5) de l'avion (1).

10. Avion à propulsion électrique (1) selon les revendications 8 et 9, dans lequel l'une extrémité longitudinale (8a) de l'élément ressort et/ou amortisseur (8) est articulée au composant structurel (5) et l'autre extrémité longitudinale (8b) de l'élément ressort et/ou amortisseur (8) est articulée au bras tiré (9).

11. Avion à propulsion électrique (1) selon la revendication 10, dans lequel l'élément ressort et/ou amortisseur (8) est complètement recouvert par un composant de carénage (7) de l'avion (1) agissant comme une surface de bord de fuite et le bras tiré (9) et la roue (3) sont chacun partiellement recouverts par ledit composant de carénage (7), tandis que le bras tiré (9) et la roue (3) sont chacun partiellement recouverts par un composant de carénage (6) de l'avion (1) agissant comme une surface de bord d'attaque.

12. Avion à propulsion électrique (1) selon la revendication 8, dans lequel l'élément ressort et/ou amortisseur (8) est formé comme une construction en porte-à-faux télescopique en ce que l'autre extrémité longitudinale (8b) est raccordée de manière fixe à un élément d'accouplement (10) dans ou sur lequel la roue (3) est montée de manière rotative autour d'un axe.

13. Avion à propulsion électrique (1) selon l'une quelconque des revendications 7 à 12, dans lequel l'élément ressort et/ou amortisseur (8) est au moins l'un des éléments suivants : une jambe oléopneumatique ; un dispositif à ressort à lames ; un amortisseur à disques de caoutchouc ; un amortisseur électromagnétique ; et/ou une bague de frottement constituée d'un ou de plusieurs disques de friction.

14. Avion à propulsion électrique (1) selon l'une quelconque des revendications 1 à 13, dans lequel le train d'atterrissage principal (2a, 2b) fait partie d'un système de train d'atterrissage tricycle constitué d'un train d'atterrissage avant (11) dans une position centrale dans le sens de la largeur et vers l'avant de l'avion (1) et de deux trains d'atterrissage principaux (2a, 2b) dans une position décalée dans le sens de la largeur et vers l'arrière de l'avion (1).
